# EUROPÄISCHE PATENTSCHRIFT

(11) **EP 1 427 046 B1**
(45) Veröffentlichungstag und Bekanntmachung des Hinweises auf die Patenterteilung: **26.07.2006**
(21) Anmeldenummer: 03022229.3
(22) Anmeldetag: 01.10.2003
(51) Int. Cl.: H01M 8/04

(54) **Brennstoffzelle mit Regulierung des Wassergehalts der Reaktanden**
Fuel Cell with reactant humidity control
Pile à combustible avec contrôle de humidité du gaz réactif

(30) Priorität: 02.10.2002 DE 10246168
(43) Veröffentlichungstag der Anmeldung: 09.06.2004
(73) Patentinhaber: DaimlerChrysler AG, 70567 Stuttgart (DE)
(72) Erfinder: Blank, Felix, 78464 Konstanz (DE); Schmid, Ottmar, 88677 Markdorf (DE); Heller, Cosmas, 88045 Friedrichshafen (DE); Schudy, Markus, 71638 Ludwigsburg (DE); Koch, Alfred, 88709 Meersburg (DE)

(56) Entgegenhaltungen:
- EP-A- 0 654 182
- US-A- 3 576 677
- US-B1- 6 416 891
- SIMON I ET AL: "Thermal and gas-sensing properties of a micromachined thermal conductivity sensor for the detection of hydrogen in automotive applications" SENSORS AND ACTUATORS A, ELSEVIER SEQUOIA S.A., LAUSANNE, CH, Bd. 97-98, 1. April 2002 (2002-04-01), Seiten 104-108, XP004361589 ISSN: 0924-4247

## Beschreibung

Die Erfindung betrifft Brennstoffzellen, wie sie beispielsweise in modernen Fahrzeugen für Traktionszwecke eingesetzt werden. Typischerweise sind dabei Gruppen von Brennstoffzellen zu sog. Stacks zusammengefaßt.

Brennstoffzellen bestehen im Allgemeinen aus zwei elektrisch leitenden Stromübertragerplatten als Kathode und Anode, zwischen denen sich eine ionenleitende Zwischenschicht befindet (Membrane-Electrode-Assembly, MEA). Die Zwischenschicht ist beispielsweise als Polymer-Elektrolyt-Membran (PEM) ausgebildet. Ein besonderes Problem bei Brennstoffzellen dieser Art stellt die Wasserbilanz dar:
Bei einer unbefeuchteten oder nur teilweise befeuchteten Membran treten u.a. Austrocknungserscheinungen der Membran auf, die den Wirkungsgrad, bzw. das Funktionieren der MEA überhaupt beeinträchtigen können. Bei partieller Austrocknung des Elektrolyten kann es im ungünstigsten Fall zu einem Gasdurchbruch und damit zur Bildung brennbarer Gasgemische kommen, wodurch die Brennstoffzelle irreparabel geschädigt werden kann.

Stand der Technik sind Anordnungen zur teilweisen Rückführung des feuchten Kathodengases zum Eingang der Kathode. Eine Brennstoffzelle mit entsprechender Befeuchtung der Reaktionsgase ist beispielsweise beschrieben in der WO 94/03937 (entspricht EP 0 654 182 A2). Bei dieser Anordnung wird der Betriebszustand der Brennstoffzelle aus der aktuellen Strom- und Spannungsabgabe zuerst ermittelt und dann mit Hilfe einer Steuerungselektronik in Abhängigkeit von diesen Betriebsparametern die Menge des zurückzuführenden Gases errechnet und über Ventile eingestellt. Dabei werden die Betriebsparameter stets nach demselben Schema berechnet, d.h. eventuelle Änderungen des Betriebsverhaltens der Zelle, z.B. durch Alterung, partielle Austrocknung usw. über die Zeit werden nicht berücksichtigt. Dies kann dazu führen, dass die Steuerungselektronik Betriebsparameter errechnet, die nicht zu optimalen Betriebszuständen in der Brennstoffzelle und damit zu schlechterer Performance führen.

Das Patent US 6,416,891 B1 offenbart ein Brennstoffzellensystem in einem Automobil mit Mitteln zur Bestimmung des Kathodengasfeuchtegehalts und Regulierung der rückgeführten Gasmenge. Die Regulierung findet mittels Ventile statt und ist von der Temperatur bzw. Feuchte der Abluft und Zuluft bestimmt. Die Feuchtesensoren sind in einer Oxidationsmittelleitung angebracht, die in Strömungsrichtung vor einem Gebläse angeordnet ist, und dienen damit der Steuerung des Frischluftstroms, der dem Brennstoffzellensystem zugeführt wird. Die frische Außenluft und die recycelte Abluft werden vor dem Wiedereintritt in die Kathode gemischt. Die Sensoren leiten die Messwerte über die Systemabgase an einen Controller weiter, der wiederum die Ventile und somit die Durchflussmenge steuert.

Aufgabe der vorliegenden Erfindung ist die Entwicklung einer verbesserten Anordnung zur Verringerung der Austrocknungserscheinungen der Membran, sowie eine vorteilhafte Regelung und Betriebsstrategie der Brennstoffzelle zur Erhöhung des Wirkungsgrades.

Diese Aufgabe wird bei einer Brennstoffzelle nach dem Oberbegriff des Anspruchs 1 gelöst durch die kennzeichnenden Merkmale des Anspruchs 1. Weitere bevorzugte Ausführungsformen sowie Verfahren zur Steuerung der erfindungsgemäßen Brennstoffzelle sind Gegenstand der Unteransprüche.

Die vorliegende Erfindung beschreibt eine Anordnung zur Vermeidung der Austrocknungserscheinungen der Membran, bei der spezielle Sensoren vorhanden sind, die den Feuchtigkeitsgehalt des Kathodengases am Ein- und Ausgang der Zelle messen. Diese Meßsignale werden zur Steuerung der Rückführung eines Teils der austretenden Kathodenluft eingesetzt. Dieser austretende Gasstrom ist durch das Produktwasser, das in der Brennstoffzelle durch Reaktion entsteht, befeuchtet und wird einem frischen Luftstrom am Eintritt der Kathode in einem bestimmten Verhältnis zugemischt. Das sich ergebende Gasgemisch weist dadurch eine höhere mittlere Feuchte auf, als wenn die Brennstoffzelle nur mit frischer Luft versorgt werden würde, wodurch ein Austrocknen der Brennstoffzelle durch das Kathodengas verhindert bzw. verringert werden kann. Je mehr Kathodenluft vom Ausgang der Zelle zum Eingang zurückgeführt wird, desto höher steigt der Wassergehalt des sich bildenden Gasgemisches am Kathodeneingang und desto weniger Wasser wird der Brennstoffzelle durch das Kathodengas entzogen. Ein Nebeneffekt, der bei einem großen rückgeführten Kathodengasstrom entstehen kann, liegt allerdings in einer geringeren Sauerstoffkonzentration des sich bildenden Gasgemisches, da der Sauerstoffanteil des rückgeführten Kathodengasstroms schon teilweise durch die elektrochemische Reaktion in der Zelle abgereichert wurde.

Die erfindungsgemäße Anordnung bietet durch Verwendung der Feuchtesensoren eine besonders einfache und effiziente Möglichkeit zur Regelung und Steuerung der Flüsse sowie zur Ermittlung und Einstellung der optimalen Betriebsparameter während des Betriebs.

Im Folgenden wird die Erfindung anhand bevorzugter Ausführungsbeispiele dargestellt, wobei Bezug genommen wird auf die in den Abbildungen angegebenen Bezugsziffern.
Es zeigen:
- Fig. 1: Brennstoffzelle mit Kathodengas-Rückführung bei Überdruck-Betrieb,
- Fig. 2: Brennstoffzelle mit Kathodengas-Rückführung bei Überdruck-Betrieb und vorhandenen Purge- und Expander-Vorrichtungen,
- Fig. 3: Brennstoffzelle mit Kathodengas-Rückführung bei Ambient-Pressure-Betrieb.

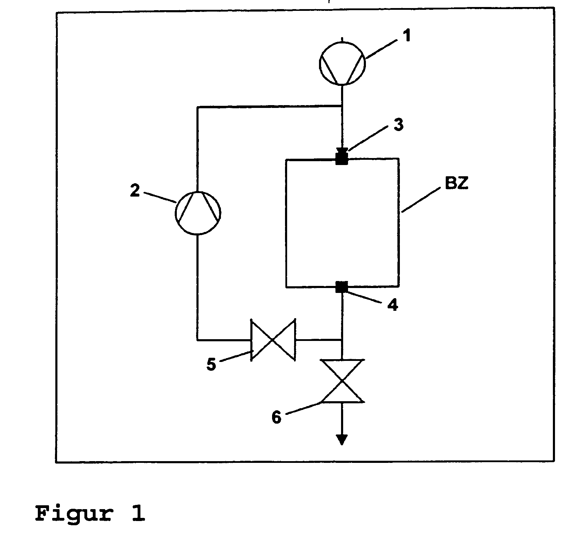

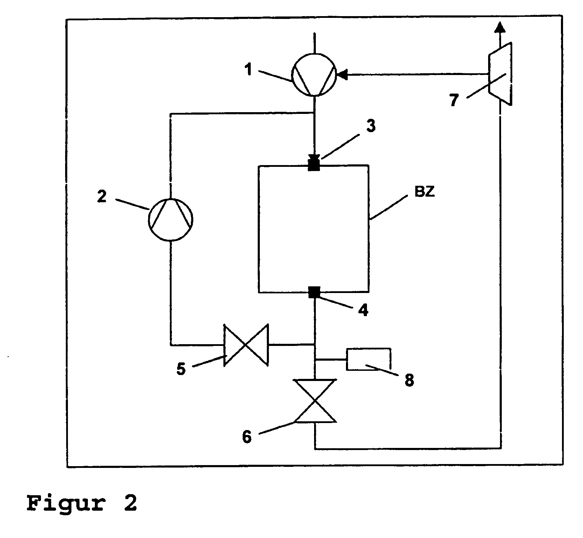

Die Figuren 1 und 2 zeigen die erfindungsgemäßen Anordnungen jeweils für den Überdruckbetrieb (Druck am Kathodenausgang liegt über Umgebungsdruck).

Figur 1 stellt eine Anordnung mit einem 1. Verdichter (1) zur Komprimierung der frischen Kathodenluft vor dem Eintritt in die Brennstoffzelle (BZ) dar. Die frische Luft wird mit dem rückgeführten Kathodengasstrom vermischt und tritt in die Brennstoffzelle bzw. -zellen ein. Am Austritt und Eintritt der Kathode sind Feuchtssensoren (3, 4) angebracht, mit denen die relative Feuchte des Gases gemessen wird. Die Messsignale der Feuchtesensoren werden anschließend für die Steuerung des Blowers bzw. des 2. Verdichters (2) verwendet, der den Massen- bzw. Volumenstrom des Kathodengasstroms regelt, der zum Eingang der Kathode rückgeführt wird. Ein Ventil (5) in der Rückführungsleitung verhindert - z.B. im ausgeschalteten Zustand des Blowers/2. Verdichters (2), dass der vom 1. Verdichter (1) geförderte Gasstrom die Brennstoffzelle durch die Rückführungsleitung umgeht. Dieses Ventil (5) kann durch andere Bauteile ersetzt werden, wie beispielsweise Klappen oder Walzen, die ebenfalls ein ungewolltes Durchströmen der Rückführungsleitung verhindern. Besitzt der Blower/2. Verdichter (2) über die Eigenschaft, ein ungewolltes Durchströmen der Rückführungsleitung verhindern zu können, kann das Ventil (5) oder ähnliche Bauteile für dessen Ersatz ganz entfallen.

Ein Druckhalteventil (6) oder ein anderes Element, das einen ausreichenden Druckabfall entlang der Strömung gewährleistet, sorgt dafür, daß ein bestimmter Überdruck am Ausgang der Anordnung eingehalten wird.

Figur 2 stellt ebenfalls eine Anordnung mit einem Verdichter zur Komprimierung der frischen Kathodenluft vor dem Eintritt in die Brennstoffzelle dar. Der Teil des aus der Kathode austretende Gasstroms, der nicht zum Kathodeneingang zurückgeführt wird, wird hier in einem Expander (7) entspannt, mit dessen gewonnener Leistung zumindest teilweise der 1. Verdichter (1) und/oder 2. Verdichter (2) angetrieben werden kann. Zusätzlich sind Mittel zum Purgen der Kathodenkammer (8) dargestellt, die ein eventuelles Ausblasen der Kathodengase ermöglichen.

Die in den Figuren 1 und 2 dargestellten Anordnungen für Überdruckbetrieb bieten die Möglichkeit, mit Hilfe eines hohen Absolutdrucks auf der Kathode ein Austrocknen der MEA auch bei unbefeuchteten Kathodengasen zu vermindern. Mit dem erfindungsgemäßen Aufbau können Betriebstemperaturen bis über 1000 °C bei ca. 4 bar absolut bei Sauerstoffanreicherung (z.B. 40% Anteil am Frischluftstrom) erreicht werden.

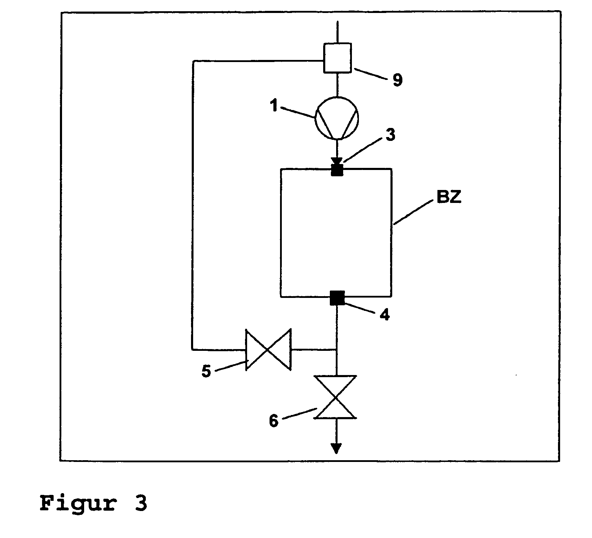

Figur 3 zeigt eine Anordnung für Ambient-Pressure-Betrieb (Druck am Kathodenausgang liegt etwa auf Umgebungsdruckniveau). Die frische Luft wird hier mit dem rückgeführten Kathodengasstrom - beispielsweise in einer Mischkammer (9) - vermischt und tritt in die Brennstoffzelle bzw. -zellen (BZ) ein. Am Austritt und Eintritt der Kathode wird über Sensoren (3, 4) die relative Feuchte des Gases gemessen. Die detektierten Messsignale werden für die Steuerung des Ventils (5) verwendet, welches bei dieser Anordnung den Massen- bzw. Volumenstrom des Kathodengasstromes regelt, der zum Eingang der Kathode zurückgeführt wird.

Bei allen dargestellten Anordnungen ist eine Anreicherung des Sauerstoffgehalts des Kathodengases (z.B. durch ein Membranmodul) möglich. Vorzugsweise wird für die Sauerstoffanreicherung ein stark abgereicherter Kathodengasstrom verwendet (z.B. der kathodenseitig aus der Brennstoffzelle tretende Gasstrom), um die Effektivität der Sauerstoffanreicherung zu steigern.

Da die Brennstoffzelle für den optimalen Betrieb sowohl ein bestimmtes Maß an Feuchte als auch einen möglichst hohen Sauerstoffpartialdruck benötigt, muß dieser optimale Punkt d.h. das optimale Verhältnis zwischen rückgeführtem Kathodengasstrom und relativ trockener Frischluft durch eine Systemanordnung für jeden Betriebspunkt eingestellt werden.

Die Steuerung des zurückgeführten Kathodengasstromes geschieht erfindungsgemäß wie folgt:

Unterschreitet der Feuchtegehalt am Kathodenausgang oder Eingang einen Grenzwert, wird der Massen- bzw. Volumenstrom des rückgeführte Kathodengasstrom so lange erhöht, bis der Sollwert (z.B. 95% Feuchte) erreicht ist. Dadurch wird der Kathodeneingang mit der gewünschten Feuchte vom Kathodenausgang versorgt. Der Sollwert entspricht vorzugsweise dem Feuchteanteil, bei dem die Zelle das beste Betriebsverhalten zeigt. Dieser Betriebspunkt kann vor dem Betrieb durch experimentelle Tests oder während des Betriebs ermittelt werden (s.u., Betriebsstrategie).

Zusätzlich wird in der Anordnung nach Figur 1 oder 2 ein Austrocknen durch einen erhöhten Eingangsdruck an der Kathode vermindert, da sich nach Einschalten des Blowers/2. Verdichters (2) die kathodenseitig fließende Gasmenge und damit der Druckverlust bei konstantem Ausgangsdruck erhöht.

Der zweite Teil der vorliegenden Erfindung betrifft eine vorteilhafte Betriebsstrategie in Verbindung mit der oben beschriebenen Anordnung zur Kathodengasrückführung in Abhängigkeit vom gemessenen Wassergehalt. Angestrebt ist dabei die Einstellung optimaler Betriebsparameter (Feuchtigkeit, Gasflüsse, Temperaturen, Drücke ....) mit minimalem Aufwand hinsichtlich Sensorik und Regelung bzw. Steuerung.

Zur Ermittlung der optimalen Betriebsparameter der Zelle wird die Brennstoffzelle in einer Testphase unter realistischen Betriebsbedingungen (z.B. entsprechend Bedingungen bei einer Autobahnfahrt bei mobiler Anwendung; Betrieb für stationäre Energieversorgung usw.) betrieben, wobei die verschiedenen leistungsbeeinflussenden Betriebsparameter systematisch variiert werden. Als Betriebsparameter kommen dabei beispielsweise der Betriebsdruck, Zelltemperatur, Taupunkttemperaturen, Feuchtigkeit, Sauerstoffanreicherung und die einzelnen Fluidflüsse der Brennstoffzelle in Frage (diese Größen werden in der Regel von den Komponenten des Brennstoffzellensystems im Betrieb eingestellt).

Durch Verstellen der Betriebsparameter verändert sich die Performance der Zelle entweder zum Schlechten (z.B. Zellspannung sinkt) oder zum Besseren (z.B. Zellspannung steigt). Durch systematische Variation während der Testphase kann daraus für alle denkbaren Kombinationen verschiedener Betriebsparameter der jeweils optimale Betriebszustand der Zelle ermittelt werden. Dabei können für jeden Lastpunkt (z.B. Stromstärke durch die Zelle) die optimalen Betriebskenndaten (z. B. Verdichterdrehzahl, Befeuchtertemperatur, Ventilzustand, usw.) der Komponenten im System gespeichert werden. Während des späteren Betriebs im Einsatz der Brennstoffzelle werden diese Daten vom System - z.B. mittels eines Prozessors - überwacht und in Abhängigkeit u.a. von der Last der Zelle die günstigsten Betriebsparameter eingestellt. Dadurch kann die Zelle - auch nach längerer Betriebsdauer und nach möglicherweise verändertem Betriebsverhalten durch Degradation o.ä. - immer im optimalen Betriebszustand gehalten werden ohne die Komplexität der Sensorik des Systems zusätzlich zu vergrößern. Ein Austrocknen der Membran kann durch diese Steuerung der Zelle auch bei unterschiedlicher Belastung der Zelle zuverlässig verhindert werden.

## Patentansprüche

1. Brennstoffzelle (BZ) mit einer Membran-ElektrodenAnordnung, bei der zur Regulierung des Kathodengas-Feuchtegehalts eine Rückführung vorhanden ist, über die ein Teil des abreagierten Kathodengases zum Eingang der Kathode zurückgeführt wird, wobei Mittel vorhanden sind, welche Betriebsparameter der Brennstoffzelle erfassen und über Mittel (2, 5) den Fluß der zurückgeführten Gasmenge steuern,
**dadurch gekennzeichnet,**
**dass** am Kathodengaseinlaß und am Kathodengasauslaß der Brennstoffzelle Mittel (3, 4) vorhanden sind, mit denen der Feuchtegehalt des Kathodengases gemessen und über die Mittel zur Steuerung (2, 5) die zurückgeführte Gasmenge beeinflusst wird.

2. Brennstoffzelle nach Anspruch 1,
**dadurch gekennzeichnet,**
**dass** die Rückführung des abreagierten Kathodengases über eine Mischkammer (9) am Einlaß des Kathode erfolgt.

3. Brennstoffzelle nach Anspruch 1 oder 2,
**dadurch gekennzeichnet,**
**dass** Mittel zur Speicherung der Sollwerte verschiedener Betriebsparameter vorhanden sind, sowie Mittel (z.B. µ-Prozessor), welche die gespeicherten Werte mit den aktuell erfaßten Werten der Betriebsparameter vergleichen und in Abhängigkeit von auftretenden Abweichungen über die Mittel (2, 5) die Menge des zurückgeführten Kathodengases steuern.

4. Verfahren zum Betreiben einer Brennstoffzelle mit den Merkmalen nach Anspruch 3,
**dadurch gekennzeichnet,**
**dass** die Sollwerte während des Betriebs der Brennstoffzelle durch Variation der leistungsbestimmenden Betriebsparameter, insbesondere des Drucks, der Temperatur, der Gasflüsse, der Feuchtegehalte, des Sauerstoffgehalts, der Spannung und der Last, experimentell bestimmt werden.

## Claims

1. Fuel cell (FC) having a membrane-electrode assembly in which, in order to regulate the cathode gas moisture content, a feedback is provided via which a part of the reacted cathode gas is recycled to the input of the cathode, means being provided which record operating parameters of the fuel cell and control the flow rate of the recycled gas quantity via means (2, 5), **characterized in that** means (3, 4) are provided at the cathode inlet and at the cathode outlet of the fuel cell, by which the moisture content of the cathode gas can be measured and the recycled gas quantity can be influenced via the control means (2, 5).

2. Fuel cell according to Claim 1, **characterized in that** the reacted cathode gas is recycled via a mixing chamber (9) at the inlet of the cathode.

3. Fuel cell according to Claim 1 or 2, **characterized in that** means are provided for storing the setpoint values of various operating parameters, as well as means (e.g. µ-processor) which compare the stored values with the currently recorded values of the operating parameters and control the quantity of the recycled cathode gas via the means (2, 5) as a function of discrepancies which occur.

4. Method for operating a fuel cell having the features according to Claim 3, **characterized in that** the setpoint values are determined experimentally during operation of the fuel cell by varying the performance-determining operating parameters, in particular the pressure, the temperature, the gas flow rates, the moisture contents, the oxygen content, the voltage and the load.

## Revendications

1. Pile à combustible (BZ) comprenant un arrangement d'électrodes à membrane, avec laquelle il existe un retour pour la régulation de la teneur en humidité du gaz de cathode par le biais duquel une partie du gaz de cathode ayant réagi est ramenée vers l'entrée de la cathode, des moyens étant présents qui détectent les paramètres de fonctionnement de la pile à combustible et commandent le débit volumique de gaz retourné par le biais de moyens (2, 5), **caractérisée en ce qu'**au niveau de l'entrée du gaz de cathode et de la sortie du gaz de cathode de la pile à combustible il existe des moyens (3, 4) avec lesquels la teneur en humidité du gaz de cathode est mesurée et par le biais desquels sont influencés des moyens pour commander (2; 5) le volume de gaz retourné.

2. Pile à combustible selon la revendication 1, **caractérisée en ce que** le retour du gaz de cathode ayant réagi s'effectue par le biais d'une chambre de mélange (9) à l'entrée de la cathode.

3. Pile à combustible selon la revendication 1 ou 2, **caractérisée en ce qu'**il existe des moyens pour enregistrer les valeurs de consigne des différents paramètres de fonctionnement ainsi que des moyens (par exemple un microprocesseur) qui comparent les valeurs enregistrées avec les valeurs actuellement détectées des paramètres de fonctionnement et commandent le volume de gaz de cathode retourné par le biais des moyens (2, 5) en fonction des écarts qui surviennent.

4. Procédé pour faire fonctionner une pile à combustible ayant les caractéristiques de la revendication 3, **caractérisé en ce que** les valeurs de consigne sont déterminées de manière expérimentale pendant le fonctionnement de la pile à combustible en faisant varier les paramètres de fonctionnement qui déterminent la puissance, notamment la pression, la température, le débit de gaz, la teneur en humidité, la teneur en oxygène, la tension et la charge.
